# EUROPEAN PATENT APPLICATION

(11) **EP 4 775 472 A1**
(43) Date of publication of application: **15.07.2026**
(21) Application number: 26150498.9
(22) Date of filing: 07.01.2026
(51) Int. Cl.: B62D 1/185, B62D 1/19

(54) **STEERING ASSEMBLY**

(30) Priority: 08.01.2025 IT 202500000108
(71) Applicant: FERRARI S.p.A., 41100 Modena (IT)
(72) Inventor: PIOLI, Andrea, 41100 MODENA (IT); CUCCHI, Matteo, 41100 MODENA (IT); DI RIENZO, Giuseppe, 41100 MODENA (IT); MULTARI, Daniele, 41100 MODENA (IT)
(74) Representative: Studio Torta S.p.A.

(57) **Abstract**

A steering assembly (1) comprises a support structure (7) designed to be coupled to a chassis of a road vehicle and extending along a longitudinal axis (5); a coaxial sleeve (10), slidingly movable with respect to the support structure (7); a steering column (4), coaxial and internal to the sleeve (10), comprising a portion (12) capable of rotating with respect to the sleeve (10) and slidingly movable, together with the sleeve (10), with respect to the support structure (7); and a retaining element (15), which is fixed to the support structure (7) and to the sleeve (10) at two ends (16, 17), respectively, has a length such that it limits a sliding of the sleeve (10) in a departing direction (V1) away from the support structure (7) to a predefined limit sliding value (PL1) and is flexible to allow the sleeve (10) to slide in an approaching direction (V2).

## Description

### CROSS-REFERENCE TO RELATED APPLICATIONS

This patent application claims priority from Italian patent application no. 102025000000108 filed on January 8, 2025, the entire disclosure of which is incorporated herein by reference.

### TECHNICAL FIELD

The invention relates to a steering assembly.

### PRIOR ART

As it is known, in motor vehicles, cockpits can be configured according to the height and build of the driver.

In general, the cockpit is equipped with a steering wheel, whose position can manually be adjusted with respect to the vehicle dashboard. The position adjustment generally consists of having the steering column (also called steering shaft) pivot up and down around a horizontal axis, which is orthogonal to the travel direction and to the rotation axis of the steering wheel, and of having the steering wheel slide back and forth along this rotation axis.

In case it is possible to adjust the steering wheel along the direction defined by the rotation axis of the steering wheel, towards or away from the vehicle dashboard, the steering column is equipped with a portion mounted so as to (directly or indirectly) slide with respect to the vehicle chassis, in order to allow for the adjustment.

After this manual adjustment, the position of the steering wheel is generally locked by a retaining mechanism (generally through friction) so that it remains fixed while driving.

There is also an end-stop device, which limits the extraction adjustment stroke of the steering wheel up to a predetermined limit, based on the spaces of the passenger compartment or the size of the steering wheel.

It is known that in case of an accident with rear crash of the vehicle, the sliding portion of the column (together with the steering wheel connected to it) tends to project towards the driver due to inertia. Inertias usually are so high that neither the retaining mechanism nor the end-stop device can exert a sufficient action to hold the steering wheel in place, with the risk of serious injury to the driver.

To overcome these drawbacks, a safety device (generally integrated in the steering assembly) is used, which intervenes in the event of an accident to prevent the steering wheel from being further extracted.

Recently, the evolution of automotive design has led to the use of increasingly heavier steering wheels, which, therefore, feature a higher inertia. However, experiments have shown that known safety devices do not perform a sufficient holding action capable of forbidding the complete extraction of these new types of steering wheel.

Therefore, an alternative solution needs to be found, which allows the steering wheel to be effectively held back so as to improve the safety of the driver during the use of the motor vehicle.

Furthermore, preferably, a solution needs to be adopted, which is relatively compact and can be integrated in known columns without modifying the structure thereof.

### SUMMARY OF THE INVENTION

The object of the invention is to provide a steering assembly that is able to fulfil the needs discussed above in a simple and economic fashion.

According to the invention, there is provided a steering assembly as defined in claim 1.

The dependent claims define special embodiments of the invention.

### BRIEF DESCRIPTION OF THE DRAWINGS

The invention will now be described with reference to the accompanying drawings, which show a non-limiting embodiment thereof, wherein:
- figure 1 shows, in perspective, a preferred embodiment of the steering assembly according to the invention;
- figure 2 is a cross-section view of a detail of figure 1, according to a vertical cross-section plane.
- figures 3 and 4 are perspective views, on a larger scale, of two further details of figure 1;
- figure 5 is a perspective view of a retaining element of the steering assembly; and
- figures 6 and 7 show the developments of the retaining force of the retaining element of figure 5, during two simulations of a rear crash of a vehicle.

### DETAILED DESCRIPTION OF PREFERRED EMBODIMENTS OF THE INVENTION

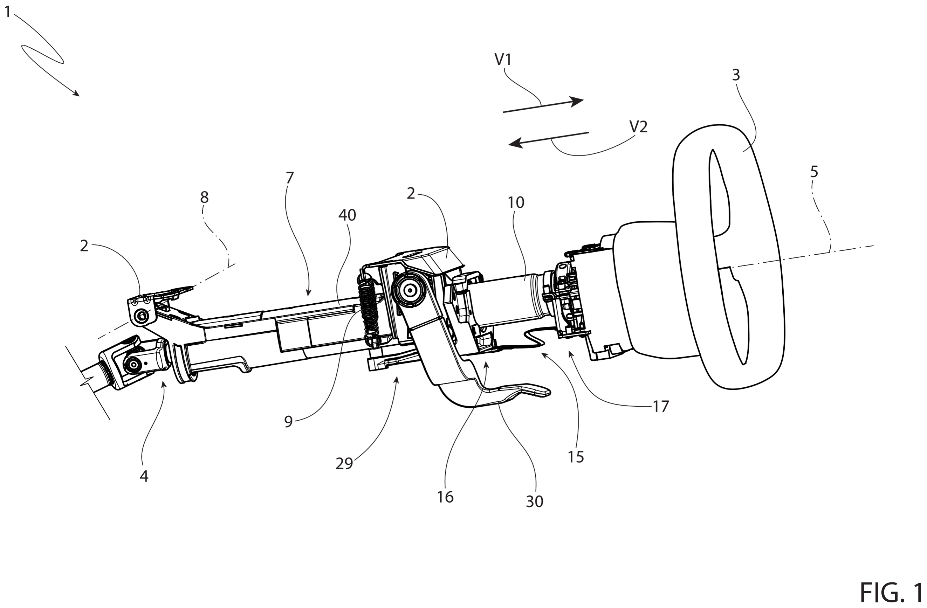

In figure 1, reference number 1 indicates a steering assembly installed on a road vehicle (not shown) in front of a driver's seat.

Incidentally, it should be pointed out that, in the following description, the terms "in front of", "behind", "at the front", "opposite", "behind", "front", "rear", etc. are used with reference to the point of view of a driver in the driver's seat (and not considering the normal longitudinal direction of travel of the vehicle).

The steering assembly 1 comprises a support structure 7, which is designed to be coupled to a chassis of the road vehicle (not shown) and extends along a longitudinal axis 5, and a steering wheel 3 designed to be handled by the driver to steer the road vehicle.

In particular, the steering assembly 1 comprises a support 2 designed to be directly fixed to the chassis of the road vehicle, which is not shown.

In particular, in the embodiment shown, the support structure 7 is coupled to the support 2 in a known manner not described in detail, so as to be angularly fixed around the longitudinal axis 5 and so as to be able to pivot around a horizontal axis 8 orthogonal to the longitudinal axis 5. In this way, the inclination of the longitudinal axis 5 around the horizontal axis 8 can be varied, in order to lift and lower the steering wheel 3 according to the ergonomics of the driver in the driver's seat, during an adjustment phase, before driving the vehicle.

In particular, at least one spring 9 is provided to exert an elastic force that tends to move the support structure 7 upwards.

The steering assembly 1 comprises a sleeve 10 extending coaxially to the support structure 7 and slidingly movable and angularly fixed with respect to the support structure 7.

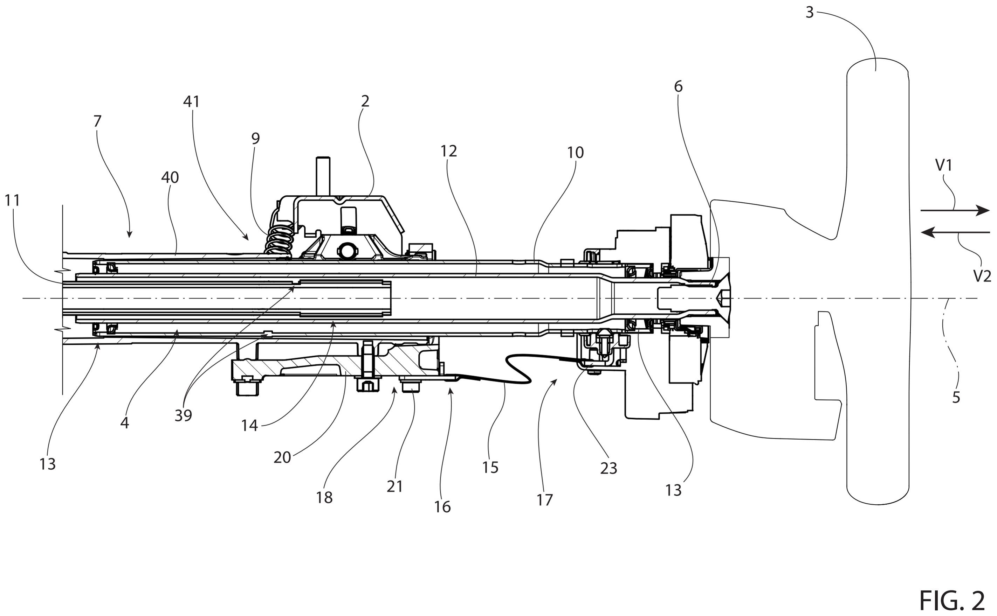

The steering assembly 1 further comprises a steering column (steering shaft) 4, which extends coaxially within the sleeve 10 (as shown in figure 2), is able to rotate about the longitudinal axis 5 and comprises a first portion 11 slidingly fixed relative to the support structure 7 and a second portion 12 coupled to the sleeve 10 in a rotary manner and slidingly movable, together with the sleeve 10, relative to the support structure 7 along the longitudinal axis 5.

In particular, the second portion 12 is coupled to the sleeve 10 in an axially fixed position. In other words, there is no relative translation between the second portion 12 of the column 4 and the sleeve 10.

As shown in figure 2, the steering wheel 3 is fixed to an axial end 6 of the second portion 12. In this way, the steering column 4 is able to rotate together with the steering wheel 3 around the longitudinal axis 5, under the manual control of the driver, in order to operate a known wheel steering mechanism, which is not shown.

According to the embodiment shown in the accompanying figures, the support structure 7 comprises a further sleeve 40 coaxial to the sleeve 10 and to the column 4.

In detail, with reference to figure 2, the sleeve 10 is partially arranged inside the sleeve 40 and is coupled to it so as to slide therein along the longitudinal axis 5. The second portion 12 of the steering column 4 is almost entirely arranged inside the sleeve 10, while the first portion 11 develops inside the sleeve 40 and is only partially arranged inside the sleeve 10, in particular at its end 14 where it is coupled to the second portion 12.

In detail, the first and the second portion 11, 12 of the column 4 are coupled to one another in a known manner, so as to permit, at the same time, the transmission of torque and the sliding between the two portions 11, 12 for the adjustment of the steering wheel 3 along the direction defined by the longitudinal axis 5, towards or away from the support structure 7. For example, in the embodiment shown, the two portions 11, 12 are coupled by means of a grooved profile.

In other words, the column 4 has a telescopic structure, so as to be extendible and therefore to be able to longitudinally move the steering wheel 3 towards and away from the driver, for reasons of ergonomics. In particular, the second portion 12 of the column and the sleeve 10 slide (translate) in an integral manner to permit the adjustment of the steering wheel 3.

In particular, the second portion 12 of the column 4 is coupled to the sleeve 10 by means of a pair of bearings 13, arranged at the two opposite ends of the sleeve 10, as shown in figure 2. In this way, the second portion 12 can rotate, under the action of the steering wheel 3, independently of the sleeve 10.

In particular, the steering assembly 1 comprises a known releasable locking device 29, not described in detail, acting upon the sleeve 10 and having a lever 30, which can manually be shifted between two positions to lock and unlock the possibility of adjusting the position of the steering wheel 3, respectively.

As shown in figures 1 to 4, the steering assembly 1 comprises a retaining element 15 comprising a first end 16 in a fixed position with respect to the support structure 7 and a second end 17 opposite the first end 16 and in a fixed position with respect to the sleeve 10.

In other words, the first end 16 is (directly or indirectly) connected in a fixed relative position with respect to the support structure 7 and the second end 17 is (directly or indirectly) connected in a fixed relative position with respect to the sleeve 10.

The retaining element 15 has a length such that it limits a sliding (stroke) of the sleeve 10 in a departing direction V1 away from the support structure 7 starting from a reference position P0 to a first predefined limit sliding value PL1 and is flexible so as to permit the axial sliding of the sleeve 10 in an approaching direction V2 towards the reference position P0.

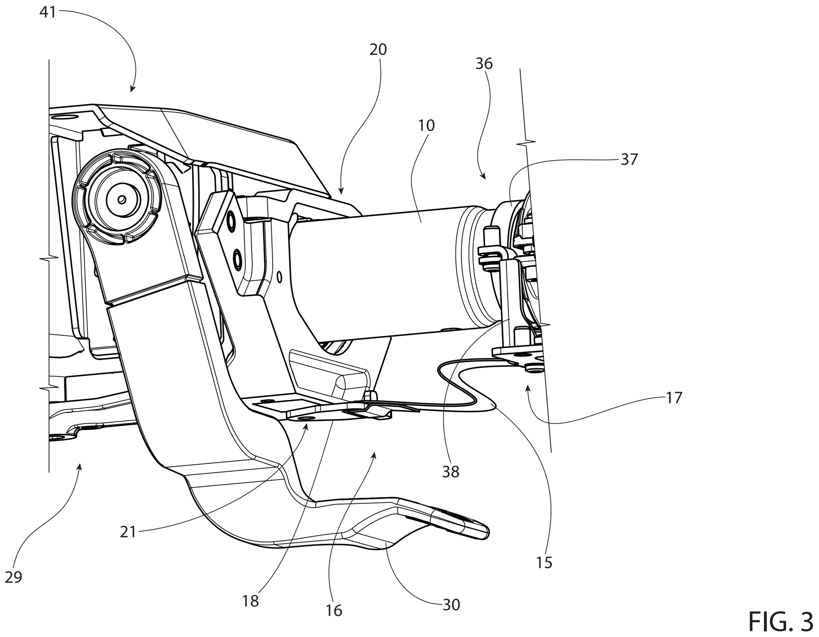

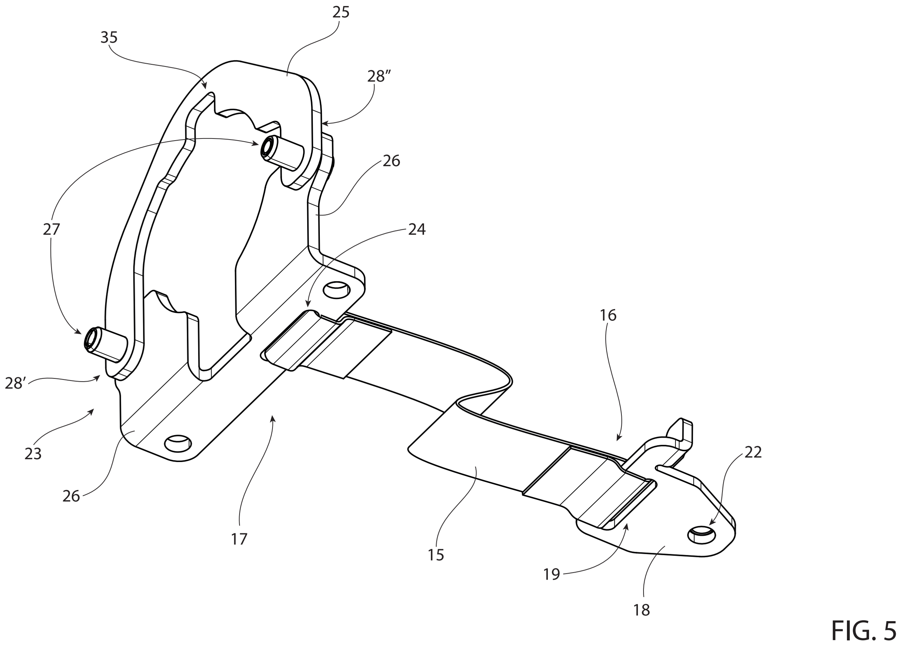

Preferably, with reference to figure 3 and to the detail of figure 5, the steering assembly 1 comprises a first fixed connection bracket 18 (constrained in a fixed manner) with respect to the support structure 7.

The first connection bracket 18 preferably comprises a first slot 19, to which the first end 16 is fixed. In other words, the retaining element 15 is fixed to the first slot 19 at its first end 16.

According to the embodiment shown, the steering assembly 1 comprises a support element 20 fixed to an axial end 41 of the sleeve 40 and the first connection bracket 18 is fixed to the support element 20 by means of a first connection device 21, in particular a screw. Therefore, the support element 20 supports the first end 16 of the retaining element 15.

In detail, the support element 20 is a known component, provided in the steering assembly 1 to perform one or more accessory functions. For example, the support element 20 is also used to support a control panel of the road vehicle, which is not shown.

According to a variant which is not shown herein, the first connection bracket 18 is directly connected (without the interposition of a further component) to the support structure 7.

In detail, as shown in figure 5, the first connection bracket 18 has a hole 22, which is used for fixing by means of the connection device 21 in the area of a respective hole (or slot) present on the support element 20 (not visible in the figures).

Preferably, the steering assembly 1 comprises a second connection bracket 23 axially fixed with respect to the sleeve 10. The second connection bracket 23 preferably comprises a second slot 24, to which the second end 17 of the retaining element 15 is fixed. In other words, the retaining element 15 is fixed to the second slot 24 at its second end 17.

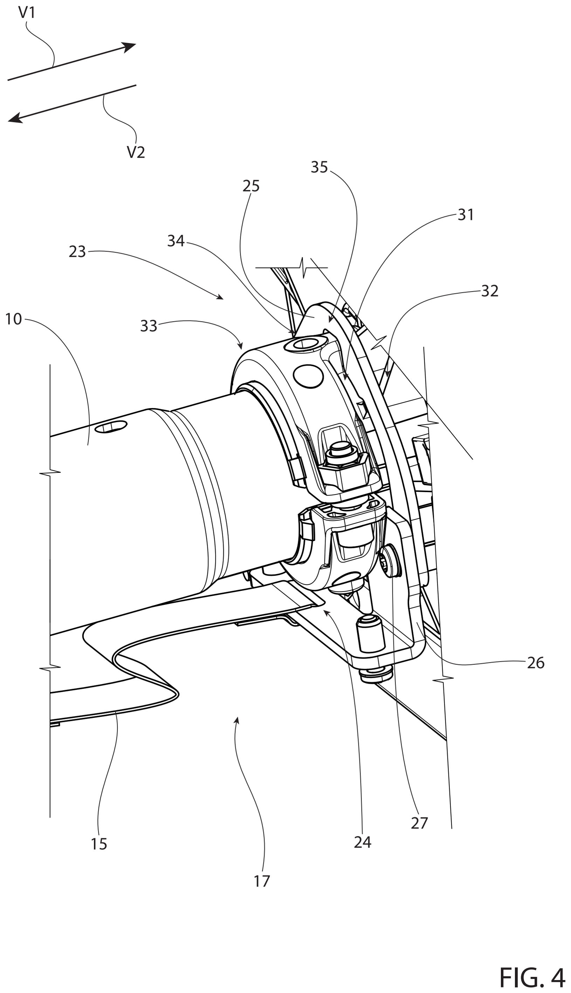

Preferably, as shown in figure 4, the second bracket 23 at least partially, in particular totally, surrounds the sleeve 10.

Preferably, the second bracket 23 is divided into (comprises) at least two separate elements 25, 26 (better visible in figure 4 and 5) connected to one another by means of a second connection device 27, in particular a pair of screws.

Preferably, the elements 25, 26 are defined by a first element 25 shaped like a C and having two ends 28', 28'' and by a second element 26, which connects the two ends 28', 28'' of the first element 25. The second bracket 23 can be fixed on the sleeve 10 by laying the element 25 from above towards the sleeve 10, then positioning the element 26 from below so as to lay it on the ends 28', 28'' of the first element 25, and finally fixing the element 26 to the ends 28', 28" by means of the connection device 27.

Preferably, with reference to figure 4, the steering assembly 1 comprises an axial shoulder 31, which is axially fixed with respect to the sleeve 10, while the second connection bracket 23 is axially interposed between the shoulder 31 and the steering wheel 3. The shoulder 31 is configured so as to stop the sliding of the second connection bracket 23 in the approaching direction V2. On the other hand, the second bracket 23 respectively constrains the shoulder 31 in the opposite direction, namely the extraction direction V1, in case of a rear crash of the road vehicle. Indeed, when the steering wheel 3 tends to be projected towards the driver by inertia, the bracket 23 holds back the steering wheel 3 thanks to the abutment between the shoulder 31 and the bracket 23.

In particular, according to the embodiment shown, the sole element 26 is in contact with the shoulder 31. Furthermore, the element 26 is arranged adjacent to the element 25 and in contact with it along the direction of the longitudinal axis 5. Preferably, the two elements 25, 26 arranged in this way are packed between the shoulder 31 and a further axial shoulder 32, provided on the steering wheel 3 and/or on a support element of the steering wheel 3 and/or on a gearshift assembly and/or on a combination switch mounted at the end of the sleeve 10, based on the steering assembly 1 considered.

In the non-limiting case shown, the shoulder 31 is obtained on a collar 33 mounted on the sleeve 10. According to variants which are not shown herein, the shoulder 31 is directly obtained on the sleeve 10.

With reference to figure 4, the steering assembly 1 further comprises a radial projection 34 carried in a fixed position by the sleeve 10, in particular by the collar 33, and a seat 35 carried in a fixed position by the second bracket 23, in particular by the element 25. The seat 35 is engaged by the radial projection 34 so as to angularly lock the second connection bracket 23 with respect to the sleeve 10.

In general, the radial projection 34 is carried in a fixed position by one of the sleeve 10 and the second connection bracket 23, and the seat 35 is carried in a fixed position by the other one of the sleeve 10 and the second connection bracket 23. In other words, the sleeve 10 and the second connection bracket 23 are coupled to one another by means of a shape coupling that prevents them from rotating relative to one another.

Preferably, the first end 16 and the second end 17 of the retaining element 15 are aligned with one another along a direction parallel to the longitudinal axis 5. In this way, the retaining element is (mainly) stressed along this direction in case of a rear crash of the road vehicle.

Preferably, the steering assembly 1 comprises an end-stop device 39, configured to limit an adjustment sliding (a stroke) of the sleeve 10 in the departing direction V1 from the reference position P0 to a second predefined limit sliding value PL2; the second predefined limit sliding value PL2 is smaller than the first predefined limit sliding value PL1. In other words, the retaining element 15 is sized so as not to interfere with the sliding of the sleeve 10 and the second portion 12 of the column 4 during the manual adjustment of the axial position of the steering wheel 3.

In figure 2, the end-stop device 39 is only schematically shown. In practice, this device could be a shoulder provided on the support structure 7 (in particular on the sleeve 40), on which a respective shoulder provided on the sleeve 10 abuts.

According to the embodiment shown, the retaining element 15 is a flat belt. More in particular, the retaining element 15 is a belt having materials and structure identical to those commonly used to manufacture safety belts for motor vehicle seats, for example comprising a weave of intertwined polymer threads.

Alternatively, the retaining element 15 is a cable. The retaining element 15 preferably is a stranded steel cable, like the one usually used for so-called *Bowden* cables.

The belt and the cable described above have the necessary axial tensile stiffness and are flexible to allow them to bend.

In general, therefore, the retaining element 15 is a flexible element having a tensile strength such as to support inertial actions in the longitudinal direction, during use.

In addition, as shown in figure 3, the steering assembly 1 comprises an anti-vibration device 36, in particular comprising a collar 37 fitted on the sleeve 10 in an axial position adjacent to the collar 33, and a further connection bracket 38 fixing the bracket 23 to the collar 37. In this way, any vibrations of the connection bracket 23 during normal running conditions of the road vehicle are reduced.

In use, in case of a rear crash of the road vehicle, the sliding components, namely the portion 12, the sleeve 10 and the steering wheel 3, tend to be projected towards the driver due to inertia. The retaining element 15 holds the sliding components back, preventing them from moving beyond a predefined limit value PL1, namely forbidding the total extraction of the sleeve 10 from the support structure 7.

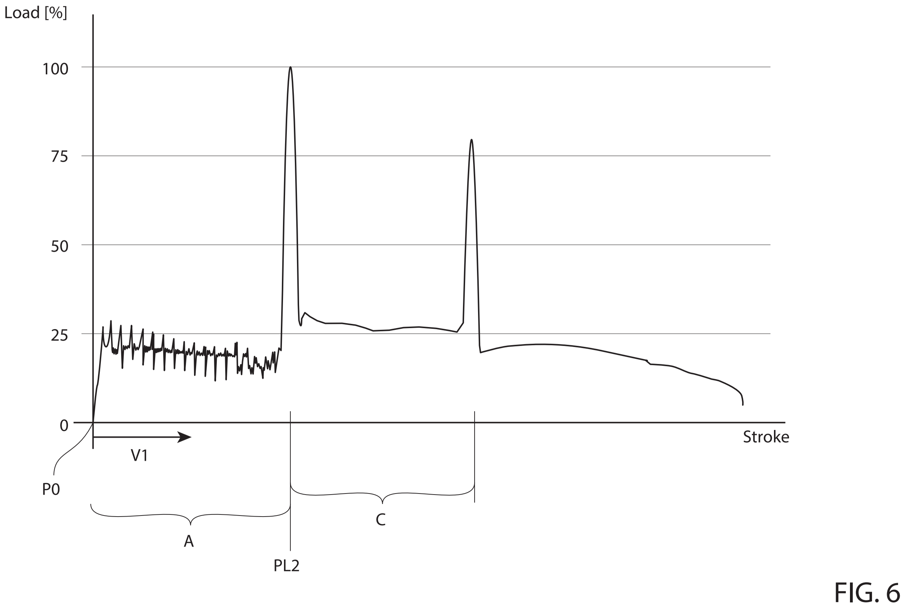

Figure 6 shows the quality of the retaining force exerted upon the sliding components during a simulation of a rear crash, without installing the retaining element 15.

In the initial phase (A), starting from the reference position P0, the stroke is free and corresponds to the manual adjustment stroke of the steering wheel 3, up to the second predefined limit sliding value PL2. In phase A, the sliding components are only retained by low frictional forces of the locking device 29, which in any case allow the sliding components to translate up to the end-stop device 39. The peak visible at the end of phase A, indicated in the area of the value PL2, represents a peak of the retaining force (100%) due to the intervention of the end-stop device 39. After this peak, due to the breakage of the end-stop device 39 (based on the simulation carried out), there is a sudden lowering of the retaining forces.

Since the retaining element 15 is not provided in the simulation of figure 6, a known safety device, not shown, intervenes to hold the steering wheel 3. In fact, after a further predefined stroke (phase C), the sliding components are locked by this safety device, which, however, exerts a relatively low retaining load, due to its nature. Therefore, when the inertial forces involved are higher, it fails to prevent further sliding and projection of the steering wheel 3 onto the passenger.

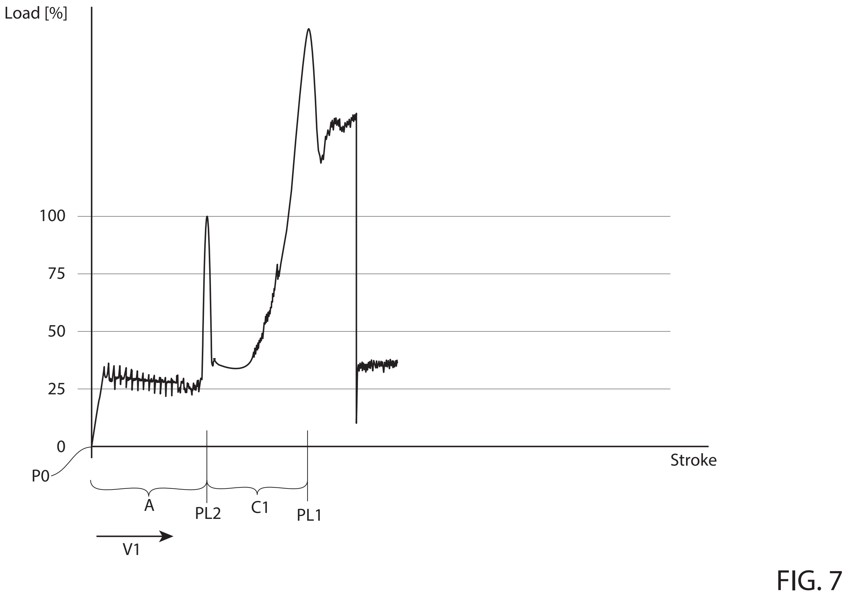

With reference to figure 7, on the contrary, it is possible to see the quality of the retaining force during a further simulation of a rear crash of the vehicle, in which the previously described retaining element 15 is employed. In this case, the retaining element 15 has a length such that it intervenes after the breakage of the end-stop device 39, which occurs in the area of the predefined sliding value PL2.

Then, following phase A, which includes the manual adjustment (described above), the retaining element 15 allows the steering wheel 3 to slide even after the end-stop device 39 breaks (phase C1), in particular, up to the first predefined limit sliding value PL1. At this value, the further movement of the steering wheel 3 away from the support structure 7 is forbidden by the retaining element 15.

In practice, the retaining element 15 exerts a sufficiently high retaining force (equal to more than twice the retaining force of the device of the known art, as visible from the comparison between the diagram of figure 6 and 7) to lock the sliding components.

The simulation shown in figure 7 entails, for illustrative purposes, the breakage of the retaining element 15 (it can be seen how the retaining force drops suddenly after the value PL1), but in fact it has been observed from experimental tests that this retaining force is adequate to hold the steering wheel 3 in case of a rear crash of the vehicle.

Owing to the above, it is evident that the steering assembly 1 allows the steering wheel 3 to be effectively held back so as to improve the safety of the driver during the use of the road vehicle, in the event of an accident with a rear crash.

In other words, thanks to the retaining element 15, the locking action is sufficient to forbid the complete extraction of new and heavier types steering wheel, therefore having a higher inertia.

Furthermore, the retaining element 15 disclosed above is compact and can be integrated in known columns 4 without modifying the structure thereof.

Other advantages are then evident for a person skilled in the art based on the features disclosed above.

Finally, owing to the above, it is evident that the steering assembly 1 described with reference to the accompanying drawings can be subjected to changes and variations, which do not go beyond the scope of protection of the invention, as set forth in the appended claims.

In particular, the support structure 7 could have a different shape, the sleeve 10 could be coupled to the support structure 7 in a different way, the support structure 7 could be fixed with respect to the vehicle chassis, instead of being adjustable in a pivoting manner, and the connection brackets 18 and 23 could have different shapes.

## Claims

1. A steering assembly (1) comprising:
- a support structure (7) suitable for being coupled to a chassis of a road vehicle and extending along a longitudinal axis (5);
- a sleeve (10) extending coaxially with the support structure (7) and slidingly movable and angularly fixed with respect to the support structure (7);
- a steering column (4) extending coaxially within the sleeve (10), being rotatable about the longitudinal axis (5) and comprising a first portion (11) slidingly fixed relative to the support structure (7) and a second portion (12) rotatably coupled to the sleeve (10) and slidingly movable, together with the sleeve (10), relative to the support structure (7) along the longitudinal axis (5);
- a steering wheel (3) fixed to an axial end (6) of the second portion (12);
the steering assembly (1) is **characterised in that** it comprises a retaining element (15) comprising a first end (16) in a fixed position with respect to the support structure (7) and a second end (17) opposite the first end (16) and in a fixed position with respect to the sleeve (10); wherein the retaining element (15) has a length such that it limits a sliding of the sleeve (10) in a departing direction (V1) from the support structure (7) starting from a reference position (P0) to a first predefined limit sliding value (PL1) and is flexible to allow axial sliding of the sleeve (10) in an approaching direction (V2) towards said reference position (P0).

2. The steering assembly (1) according to claim 1 and comprising a first connection bracket (18) fixed with respect to the support structure (7); the first connection bracket (18) comprising a first slot (19) to which the first end (16) is fixed.

3. The steering assembly (1) according to claim 2 and comprising a support element (20) fixed to an axial end (6) of the support structure (7), wherein the first connection bracket (18) is fixed to the support element (20) by means of a first connection device (21).

4. The steering assembly (1) according to any one of the preceding claims and comprising a second connection bracket (23) axially fixed with respect to the sleeve (10); the second connection bracket (23) comprising a second slot (24) to which the second end (17) is fixed.

5. The steering assembly (1) according to claim 4, wherein the second connection bracket (23) surrounds at least partially, in particular totally, the sleeve (10).

6. The steering assembly (1) according to claim 5, wherein the second connection bracket (23) is subdivided into at least two separate elements (25, 26) and connected to each other via a second connection device (27).

7. The steering assembly (1) according to claim 6, wherein the elements (25, 26) comprise a first element (25) shaped like a C and having two ends (28', 28'') and a second element (26), which connects the two ends (28', 28'') of the first element (25).

8. The steering assembly (1) according to any one of claims 4 to 7 and comprising an axial shoulder (31) which is axially fixed with respect to the sleeve (10); wherein the second connection bracket (23) is axially interposed between the shoulder (31) and the steering wheel (3); the shoulder (31) is configured to block the sliding of the second connection bracket (23) in the approaching direction (V2).

9. The steering assembly (1) according to any one of claims 4 to 8, further comprising:
- a radial projection (34) carried in a fixed position by one between the sleeve (10) and the second connection bracket (23); and
- a seat (35) carried in a fixed position by the other between the sleeve (10) and the second connection bracket (23) and engaged by said radial projection (34) so as to angularly block the second connection bracket (23) with respect to the sleeve (10).

10. The steering assembly (1) according to any one of the preceding claims and comprising an end-stop device (39), configured to limit an adjustment sliding of the sleeve (10) in the departing direction (V1) from the reference position (P0) to a second predefined limit sliding value (PL2); wherein the second predefined limit sliding value (PL2) is smaller than the first predefined limit sliding value (PL1).

11. The steering assembly (1) according to any one of the preceding claims, wherein the first end (16) and the second end (17) of the retaining element (15) are aligned with each other along a direction parallel to the longitudinal axis (5).

12. The steering assembly (1) according to any one of the preceding claims, wherein the retaining element (15) is a belt or a cable.

13. A road vehicle comprising a chassis and a steering assembly (1) according to any one of the preceding claims, wherein the support structure (7) is coupled to the chassis so as to have an adjustment movement about a horizontal axis (8) orthogonal to said longitudinal axis (5).
